# FASCICULE DE BREVET EUROPEEN

(11) **EP 2 671 025 B1**
(45) Date de publication et mention de la délivrance du brevet: **24.09.2014**
(21) Numéro de dépôt: 12705374.2
(22) Date de dépôt: 25.01.2012
(51) Int. Cl.: F23D 11/24

(54) **DISPOSITIF D'INJECTION POUR UNE CHAMBRE DE COMBUSTION DE TURBOMACHINE**
INJEKTIONSVORRICHTUNG FÜR EINE TURBOMASCHINEN-BRENNKAMMER
INJECTION DEVICE FOR A TURBO MACHINE COMBUSTION CHAMBER

(30) Priorité: 31.01.2011 FR 1150731
(43) Date de publication de la demande: 11.12.2013
(73) Titulaire: SNECMA, 75015 Paris (FR)
(72) Inventeur: CORTES, Thierry, F-77550 Moissy-Cramayel Cedex (FR); CAMERIANO, Laurent, Bernard, F-77550 Moissy-Cramayel Cedex (FR)
(74) Mandataire: Ramey, Daniel
(86) Numéro de dépôt international: PCT/FR2012/050160
(87) Numéro de publication internationale: WO 2012/104523

(56) Documents cités:
- EP-A1- 2 026 002
- EP-A2- 1 402 956
- GB-A- 791 399

## Description

La présente invention concerne un dispositif d'injection de carburant « multipoint » pour une chambre annulaire de combustion de turbomachine telle qu'un turboréacteur ou un turbopropulseur d'avion.

De manière connue, une turbomachine comprend une chambre annulaire de combustion agencée en sortie d'un compresseur haute pression et pourvue d'une pluralité de dispositifs d'injection de carburant régulièrement répartis circonférentiellement à l'entrée de la chambre de combustion. Un dispositif d'injection « multipoint » comprend un venturi à l'intérieur duquel est monté un injecteur pilote centré sur l'axe du venturi et alimenté en permanence par un circuit pilote et un second venturi coaxial au premier et entourant celui-ci. Ce second venturi comprend une chambre annulaire à son extrémité amont dans laquelle est montée une couronne annulaire alimentée en carburant par un circuit de carburant. La couronne comporte des orifices d'injection de carburant formés dans sa face frontale orientée vers l'aval. Ces orifices débouchent en aval dans des orifices d'une paroi frontale de la chambre annulaire débouchant eux-mêmes dans la chambre de combustion.

Le circuit pilote fournit en permanence un débit de carburant optimisé pour les bas régimes et le circuit multipoint fournit un débit de carburant intermittent optimisé pour les hauts régimes.

Toutefois, l'utilisation intermittente du circuit multipoint a pour inconvénient majeur d'induire, sous l'effet des températures élevées dues au rayonnement de la flamme dans la chambre de combustion, un gommage ou une cokéfaction du carburant stagnant à l'intérieur du circuit multipoint lorsque celui-ci est coupé. Ces phénomènes peuvent entraîner une formation de coke dans les orifices d'injection de carburant du circuit multipoint gênant ou réduisant la pulvérisation du carburant par le circuit multipoint et donc le fonctionnement de la chambre de combustion.

Pour pallier cet inconvénient, on a proposé dans le document EP2026002 de la demanderesse d'utiliser le circuit pilote de carburant pour refroidir le circuit multipoint et y réduire la formation de coke, grâce à deux canaux annulaires formés dans la chambre annulaire radialement à l'intérieur et à l'extérieur de la couronne annulaire, ces deux canaux étant reliés en sortie à l'injecteur pilote. La demanderesse a également proposé dans le document FR09/04906 d'agencer des moyens d'isolation thermique entre la face frontale de la chambre et la paroi frontale de la chambre annulaire. Dans un autre document FR09/04907, la demanderesse a proposé de réaliser un refroidissement de la face frontale de la couronne par dérivation d'une partie du carburant des canaux annulaires interne ou externe et circulation entre la face frontale de la couronne annulaire et la paroi frontale de la chambre annulaire.

Si ces techniques réduisent la cokéfaction du carburant au voisinage des orifices de la couronne, cette réduction n'est toutefois pas suffisante pour garantir un fonctionnement optimal du circuit multipoint.

En effet, la fixation de la couronne annulaire à l'intérieur de la chambre annulaire ainsi que la garantie d'une bonne étanchéité entre le circuit multipoint et le circuit pilote imposent de réaliser une soudure ou une brasure de la face frontale de la couronne sur la paroi frontale de la chambre. Ainsi, une zone de contact existe entre la face frontale de la couronne et la paroi frontale de la chambre, ce qui traduit par une bonne conduction du flux thermique issu de la flamme de combustion vers les orifices de la couronne et un risque de formation de coke lors de l'arrêt du circuit multipoint.

L'invention a notamment pour but d'apporter une solution simple, efficace et économique à ce problème.

A cet effet, elle propose un dispositif d'injection de carburant pour une chambre annulaire de combustion de turbomachine, comprenant un circuit pilote alimentant en permanence un injecteur débouchant dans un premier venturi et un circuit multipoint alimentant par intermittence des orifices d'injection formés dans une face frontale d'une chambre annulaire amont d'un second venturi coaxial au premier venturi et entourant celui-ci, une couronne annulaire étant montée dans la chambre annulaire et comprenant des orifices de passage de carburant débouchant dans les orifices d'injection précités, caractérisé en ce que chaque orifice de passage de carburant formé dans la couronne annulaire comprend une zone à section réduite prolongée au moins vers l'amont ou l'aval par une partie d'orifice à section croissante.

A la différence de la technique antérieure, où les orifices étaient des perçages à section circulaire constante, les orifices de passage de carburant de la couronne annulaire ont chacun une zone à section réduite dont l'aire détermine, pour une pression donnée, le débit de carburant des injecteurs. Les parties d'orifices à section croissante permettent une augmentation du volume disponible dans chaque orifice pour le passage du carburant, ce qui limite la formation de coke dans le circuit multipoint. Avec le dispositif d'injection selon l'invention, il est possible de conserver un débit de carburant du circuit multipoint identique à celui de la technique antérieure, tout en limitant les inconvénients dus à la cokéfaction du carburant à l'arrêt du circuit multipoint.

Selon une autre caractéristique de l'invention, la partie à section croissante augmente progressivement jusqu'au débouché amont ou aval de l'orifice.

La zone à section réduite peut être formée à l'extrémité amont ou à l'extrémité aval de l'orifice.

En variante, la zone à section réduite est formée entre les extrémités amont et aval de l'orifice et est prolongée par une partie à section croissante en direction amont et par une partie à section croissante en direction aval.

Dans une réalisation particulière de l'invention, la zone à section réduite est formée dans une partie médiane de l'orifice.

La ou les parties d'orifice à section croissante peuvent avoir des profils variés de manière à avoir une section croissante. En particulier, elles peuvent avoir un profil conique ou bien incurvé.

Dans une réalisation avantageuse de l'invention, le circuit pilote comprend un circuit de refroidissement de la couronne annulaire et des moyens de protection thermique de la face frontale de la couronne annulaire sont intercalés entre la face frontale de la couronne annulaire et la paroi frontale de la chambre annulaire.

Dans une première variante de cette réalisation, les moyens de protection thermique comprennent des moyens d'isolation thermique de la face frontale de la couronne annulaire intercalés entre la face frontale de la couronne annulaire et la paroi frontale de la chambre annulaire.

Dans une seconde variante, les moyens d'isolation thermique sont formés par une partie du circuit de refroidissement s'étendant sur la face frontale de la couronne annulaire au voisinage immédiat des orifices d'injection.

Dans l'une ou l'autre des deux précédentes configurations, l'invention tire avantage de la diminution de la température au niveau des orifices d'injection de la couronne du fait de l'adjonction de moyens de refroidissement ou bien de moyens d'isolation thermique, ce qui permet de limiter encore davantage la formation de coke au niveau des orifices d'injection.

L'invention concerne également une chambre annulaire de combustion de turbomachine, comprenant au moins un dispositif d'injection de carburant tel que décrit ci-dessus. Elle concerne encore une turbomachine, telle qu'un turboréacteur ou un turbopropulseur, comprenant une telle chambre de combustion.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'un dispositif d'injection de carburant multipoint selon la technique antérieure ;
- la figure 2 est une vue schématique et à plus grande échelle de la zone délimitée en pointillée sur la figure 1 ;
- les figures 3 et 4 sont des vues schématiques de deux réalisations d'un dispositif selon l'invention ;
- les figures 5 et 6 sont des représentations schématiques de variantes de réalisation de l'invention.

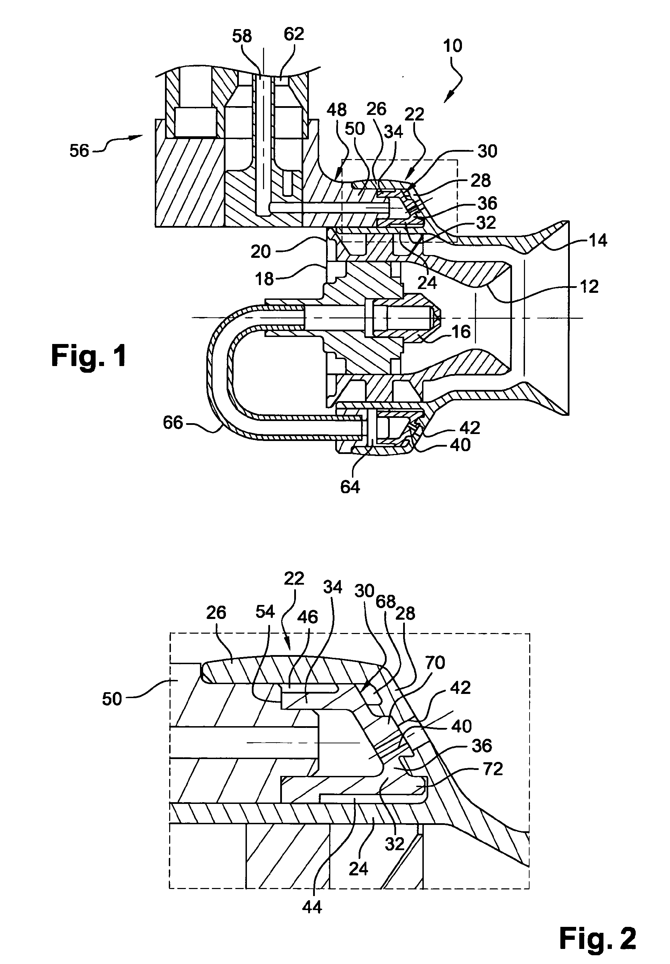

On se réfère tout d'abord à la figure 1 représentant un dispositif d'injection 10 selon la technique antérieure et comportant deux systèmes d'injection de carburant dont l'un est un système pilote fonctionnant en permanence et l'autre un système multipoint fonctionnant par intermittence. Ce dispositif est destiné à être monté dans une ouverture d'une paroi de fond d'une chambre de combustion annulaire d'une turbomachine qui est alimentée en air par un compresseur haute-pression amont et dont les gaz de combustion alimentent une turbine montée en aval.

Ce dispositif comprend un premier venturi 12 et un second venturi 14 coaxiaux, le premier venturi 12 étant monté à l'intérieur du second venturi 14. Un injecteur pilote 16 est monté à l'intérieur d'un premier étage de vrilles 18 inséré axialement à l'intérieur du premier venturi 12. Un second étage de vrilles 20 est formé à l'extrémité amont et radialement à l'extérieur du premier venturi 12 et sépare les premier et second venturis 12, 14.

Le second venturi 14 comprend une chambre annulaire 22 délimitée par deux parois cylindriques radialement interne 24 et externe 26 reliées l'une à l'autre par une paroi aval tronconique 28 convergeant vers l'aval. Une couronne annulaire 30 comprenant également deux parois cylindriques radialement interne 32 et externe 34 reliée l'une à l'autre par une paroi aval tronconique 36 convergeant vers l'aval est montée à l'intérieur de la chambre annulaire 22 de manière à ce que les parois aval 28, 36 de la chambre annulaire 22 et de la couronne annulaire 30 soient appliquées l'une sur l'autre.

La couronne annulaire 30 et la chambre annulaire 22 sont ouvertes à leur extrémité amont. Les parois cylindriques 24, 26 de la chambre annulaire 22 s'étendent au-delà vers l'amont par rapport aux extrémités amont des parois cylindriques 32, 34 de la couronne annulaire 30.

La paroi aval 36 de la couronne annulaire 30 comprend des orifices cylindriques d'injection 40 régulièrement répartis circonférentiellement et débouchant dans des orifices cylindriques coaxiaux 42 correspondants de la paroi aval 28 de la chambre annulaire 22. Les orifices 42 de la chambre annulaire 22 ont un diamètre supérieur à celui des orifices 40 de la couronne annulaire 30 (figure 2).

Un canal annulaire interne 44 de passage de carburant est défini entre les parois cylindriques internes 24, 32 de la couronne annulaire 30 et de la chambre annulaire 22. De manière similaire, un canal annulaire externe 46 de passage de carburant est défini entre les parois cylindriques externes 26, 34 de la couronne annulaire 30 et de la chambre annulaire 22.

Le dispositif d'injection comprend un corps 48 d'amenée de carburant dont la partie aval est annulaire et comprend un conduit cylindrique 50 engagé axialement à étanchéité entre les parois cylindriques interne 24 et externe 26 de la chambre annulaire 22 et débouchant à étanchéité entre les parois cylindriques interne 32 et externe 34 de la couronne annulaire 30. Le conduit 50 comporte un épaulement radial 54 venant en butée sur les extrémités amont des parois cylindriques interne 32 et externe 34 de la couronne annulaire 30.

Un bras 56 d'alimentation en carburant est relié au corps 48 et comprend deux conduits coaxiaux dont l'un 58 interne alimente le conduit 50 du corps 48 débouchant en aval à l'intérieur de la couronne annulaire 30 afin d'alimenter les orifices 40 et 42 et l'autre 62 externe alimente en sortie des canaux (non représentés) débouchant dans les canaux annulaires interne 44 et externe 46, respectivement.

Le corps 48 comprend une cavité 64 de collecte du carburant formée diamétralement à l'opposé du bras 56 d'alimentation en carburant et au niveau des extrémités amont des parois cylindriques 32, 34 de la couronne annulaire 30 de manière à ce que les canaux annulaires interne 44 et externe 46 communiquent avec la cavité de collecte 64. Un conduit 66 est relié à une extrémité à l'injecteur pilote 16 et à l'autre extrémité débouche dans la cavité de collecte 64.

En fonctionnement, le conduit interne 58 du bras 56 alimente en carburant le conduit 50 du corps 48, le carburant circulant ensuite dans la couronne annulaire 30 et étant injecté dans la chambre de combustion en aval par les orifices 40, 42 de la couronne 30 et de la chambre 22.

Le conduit externe 62 du bras 56 alimente les canaux du corps 48 débouchant dans les canaux annulaires interne 44 et externe 46, le carburant passant ensuite dans la cavité de collecte 64 pour alimenter l'injecteur pilote 16 par l'intermédiaire du conduit 66.

Le circuit pilote fonctionne en permanence tandis que le circuit multipoint fonctionne par intermittence lors de phases de vol spécifiques telles que le décollage nécessitant la puissance maximale.

Lors du fonctionnement de la turbomachine, l'air chaud en provenance du compresseur haute pression, qui peut atteindre 600 à 700 °C, s'écoule à l'intérieur du premier venturi 12, dans la première vrille radiale 18, et de l'air s'écoule également à l'intérieur de la seconde vrille radiale 20, entre les premier 12 et second 14 venturis.

Les canaux annulaires interne 44 et externe 46 dans lesquels circule en permanence du carburant d'alimentation de l'injecteur pilote, forment un circuit de refroidissement radialement à l'extérieur et à l'intérieur de la couronne annulaire 30, ce qui évite une cokéfaction du carburant dans la couronne 30 due au rayonnement thermique de la combustion, et ceci lors des phases de vol où le circuit multipoint n'est pas en fonctionnement.

Comme indiqué précédemment, la face aval 28 de la chambre annulaire 22 est soumise directement au rayonnement thermique de la combustion, ce qui peut conduire à une cokéfaction du carburant dans les orifices d'injection 40, 42 de la couronne 30 et de la chambre annulaire 22 lors des phases de vol où le circuit multipoint n'est pas utilisé.

Pour limiter l'augmentation de la température de la face frontale de la couronne annulaire 30, des moyens d'isolation thermique sont agencés entre la face frontale 36 de la couronne 30 et la paroi frontale 28 de la chambre annulaire 22.

Ces moyens d'isolation thermique comprennent une cavité annulaire 68 formée entre la face frontale 28 de la couronne annulaire 30 et la paroi aval 28 de la chambre annulaire 22. Cette cavité 68 s'étend entre les orifices d'injection 40 de manière à réaliser une isolation thermique au plus près de ceux-ci, ce qui permet de diminuer les risques de cokéfaction du carburant au niveau des orifices d'injection 42 de carburant afin de garantir un fonctionnement optimal du circuit multipoint.

La face frontale 36 de la couronne annulaire 30 comprend une pluralité de tétons 70 en saillie régulièrement répartis autour de la couronne 30 et comprenant chacun un orifice d'injection 42. Ces tétons 70 sont insérés dans des cavités de bossages de la face amont de la paroi aval 28 de la chambre annulaire 22. Les tétons 70 sont engagés à l'intérieur de ces cavités de manière à venir en butée sur la paroi aval 28 de la chambre annulaire 22 pour assurer un positionnement axial correct de la couronne 30 dans la chambre annulaire 22. Les tétons 70 ont une forme sensiblement cylindrique et sont brasés à l'intérieur des cavités des bossages afin d'assurer l'étanchéité entre le circuit pilote et le circuit multipoint.

La paroi cylindrique externe 34 de la couronne 30 est en appui radial par un bourrelet annulaire sur la paroi cylindrique externe 26 de la chambre annulaire 22 afin de centrer la couronne 30 dans la chambre annulaire 22. La face frontale 36 comprend un rebord annulaire 72 s'étendant vers l'aval et dans le prolongement de la paroi cylindrique interne 32. L'extrémité aval de ce rebord annulaire 72 forme un passage annulaire de carburant entre le canal annulaire interne 44 et la cavité annulaire frontale 68.

Le canal annulaire externe 46 est isolé de la cavité frontale 68 par le bourrelet annulaire de la paroi 34 de la couronne 30 laquelle peut être brasée ou non sur la paroi cylindrique externe 26 de la chambre annulaire 22 de manière à réaliser ou non une liaison étanche. En fonctionnement, le carburant présent à l'intérieur de la cavité 68 va cokéfier sous l'effet du flux thermique, formant ainsi un isolant thermique protégeant la couronne annulaire 30.

Comme déjà indiqué précédemment, ce type de dispositif permet de limiter l'augmentation de température de la face frontale 36 de la couronne annulaire 30 et par conséquent limite la formation de coke lorsque le circuit multipoint n'est pas en fonctionnement. Toutefois, la réalisation d'une jonction par soudure entre la face frontale 36 de la couronne 30 et la paroi frontale 28 de la chambre annulaire 22, au niveau des tétons 70, forme un pont thermique et permet une bonne conduction de la chaleur issue de la chambre de combustion, ce qui peut favoriser la formation de coke au niveau des orifices 40 de la couronne 30.

L'invention apporte une solution à ce problème en faisant varier la section des orifices de passage de carburant formés dans la couronne annulaire 74 de façon à ce que chaque orifice comprenne une zone à section réduite prolongée par une partie à section croissante.

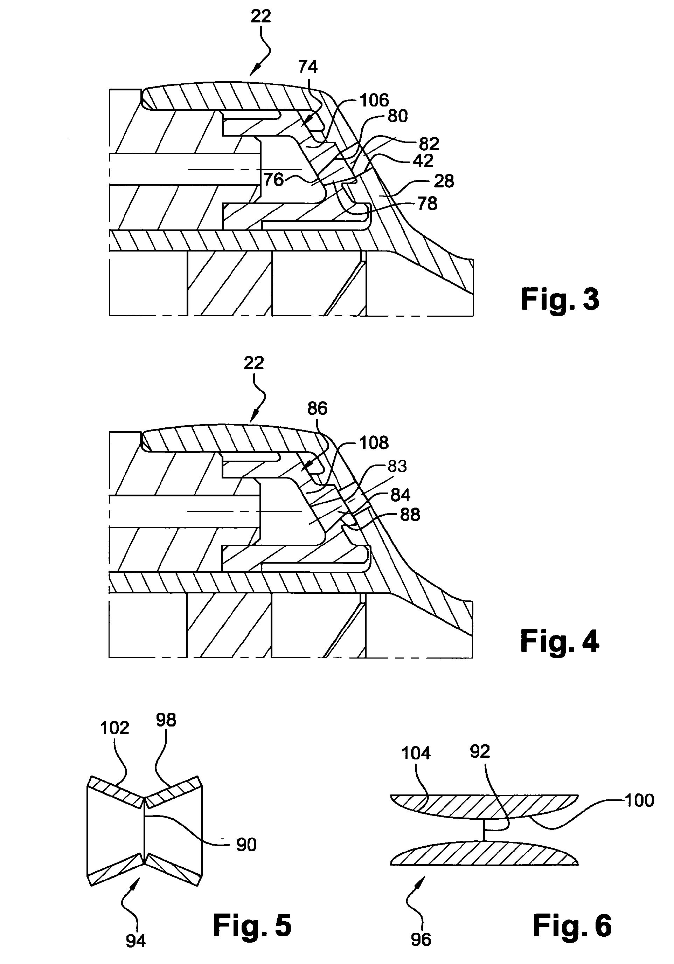

Dans une première réalisation représentée en figure 3, la section réduite 76 de chaque orifice 78 de la couronne annulaire 74 est à l'extrémité amont de l'orifice 78, au niveau du débouché de l'orifice 78 à l'intérieur de la couronne annulaire 74. La surface interne 80 de chaque orifice 78 est conique avec une section augmentant vers l'extrémité aval de l'orifice 78. Le profil du cône est tel que le diamètre de la section aval 82 de chaque orifice 78 est sensiblement égal au diamètre des orifices 42 de la chambre annulaire 22.

Cette configuration présente l'avantage d'être simple à mettre en oeuvre puisque l'usinage des orifices 78 de la couronne annulaire 74 avec une section en cône peut être effectué par introduction d'un outil adapté à travers les orifices 42 de la chambre annulaire 22. Ainsi, un tel usinage peut être réalisé sur un système d'injection dans lequel la couronne annulaire 74 est déjà montée et fixée à l'intérieur de la chambre annulaire 22. Enfin, l'intégration d'une partie à section croissante vers l'extrémité aval de l'orifice forme une partie évasée vers l'aval favorisant l'éjection du carburant dans la chambre de combustion.

Dans une seconde réalisation de l'invention représentée en figure 4, la section réduite 83 de chaque orifice 84 de la couronne annulaire 86 est à l'extrémité aval de l'orifice 84. La surface interne 88 de chaque orifice 84 est conique avec une section augmentant depuis l'extrémité aval de l'orifice 84 jusqu'à son extrémité amont. Ce type de configuration est plus difficile à réaliser et nécessite d'utiliser des techniques d'usinage plus complexes telles que le perçage laser ou l'électroérosion. Les orifices 84 à section augmentant vers l'amont doivent être réalisés sur la couronne annulaire 86 préalablement à son montage à l'intérieur de la chambre annulaire 22. Toutefois, cette configuration présente l'avantage par rapport à la configuration précédente (figure 3) de réduire l'exposition de la surface interne 88 des orifices 84 de la couronne 86 au rayonnement de la flamme de combustion.

Dans deux autres réalisations de l'invention représentées aux figures 5 et 6, la section réduite 90, 92 est formée entre les extrémités amont et aval de chaque orifice 94, 96 de la couronne annulaire et dans une partie médiane de l'orifice. Dans ces réalisations, chaque orifice 94, 96 comprend une partie à section croissante 98, 100 en direction aval et une partie à section croissante 102, 104 en direction amont. Les parties croissantes peuvent chacune avoir un profil conique 98, 102 (figure 5) ou un profil incurvé 100, 104 (figure 6). Dans ce dernier cas, on note que les surfaces incurvées 100, 104 sont convexes. Ces surfaces pourraient également être concaves.

Dans d'autres variantes de l'invention, les parois des orifices de la couronne représentées aux figures 3 et 4 peuvent avoir un profil incurvé concave ou convexe.

Dans une réalisation pratique de l'invention, la section réduite de chaque orifice de la couronne annulaire est comprise entre environ 5.10⁻⁶ et 10.10⁻⁶ m² pour un débit massique de carburant du circuit multipoint compris entre environ 1 et 2 g/s.

Ainsi, la modification du profil des orifices 78, 84, 94, 96 de manière à avoir une section réduite et au moins une partie à section croissante permet de réduire l'impact d'une éventuelle formation de coke au niveau des orifices de la couronne annulaire puisque le volume de chaque orifice 78, 84, 94, 96 de la couronne annulaire est agrandi par rapport à celui des orifices de la technique antérieure. De cette manière on peut garantir un fonctionnement optimal du circuit multipoint.

Dans la description faite en référence aux dessins, le dispositif d'injection comprend des moyens d'isolation thermique de la face frontale 106, 108 de la couronne annulaire 74, 86. Toutefois, l'invention est également applicable à un dispositif d'injection ne comprenant pas de moyens d'isolation thermique mais des moyens de refroidissement de la face frontale de la couronne annulaire. A cette fin, le circuit de refroidissement formé par les canaux interne 44 et externe 46 s'étend sur la face frontale de la chambre au voisinage des orifices d'injection de la couronne. Dans une telle configuration, une partie du circuit de refroidissement est formée par une rainure de la face aval de la couronne annulaire, cette face aval étant appliquée sur la face frontale de la chambre annulaire. Le circuit aval peut être en communication fluidique avec le canal interne ou le canal externe et être ondulé de manière à s'étendre en alternance radialement à l'intérieur et à l'extérieur des orifices d'injection de la couronne annulaire, afin de positionner les orifices au plus près des orifices d'injection. Une telle configuration de circuit de refroidissement est décrite en détail dans la demande FR09/04907 de la demanderesse.

Si l'invention est particulièrement intéressante lorsqu'elle est utilisée en combinaison avec des moyens de refroidissement ou des moyens d'isolation thermique de la face frontale comme décrit précédemment, elle peut aussi être utilisée avec un dispositif dépourvu de tels moyens.

Ainsi, la face frontale de la couronne annulaire peut être en contact sur toute sa surface avec la paroi frontale de la chambre annulaire. Le dispositif d'injection selon l'invention peut aussi comprendre ou non un circuit de refroidissement de la couronne annulaire par circulation de carburant du circuit pilote dans des canaux annulaires interne ou externe comme ceux décrit ci-dessus.

## Revendications

1. Dispositif d'injection de carburant pour une chambre annulaire de combustion de turbomachine, comprenant un circuit pilote alimentant en permanence un injecteur (16) débouchant dans un premier venturi (12) et un circuit multipoint alimentant par intermittence des orifices d'injection (42) formés dans une face frontale (28) d'une chambre annulaire (22) amont d'un second venturi (14) coaxial au premier venturi (12) et entourant celui-ci, une couronne annulaire (74, 86) étant montée dans la chambre annulaire (22) et comprenant des orifices (78, 84) de passage de carburant débouchant dans les orifices d'injection (42) précités, **caractérisé en ce que** chaque orifice (78, 84) de passage de carburant formé dans la couronne annulaire (74, 86) comprend une zone (76, 83, 90, 92) à section réduite prolongée au moins vers l'amont ou l'aval par une partie d'orifice à section croissante.

2. Dispositif selon la revendication 1, **caractérisé en ce que** la partie à section croissante augmente progressivement jusqu'au débouché amont ou aval de l'orifice (78, 84).

3. Dispositif selon la revendication 1 ou 2, **caractérisé en ce que** la zone à section réduite (76, 83) est formée à une extrémité amont ou aval de l'orifice (78, 84).

4. Dispositif selon la revendication 1 ou 2, **caractérisé en ce que** la zone à section réduite (90, 92) est formée entre les extrémités amont et aval de l'orifice (94, 96) et est prolongée par une partie à section croissante (98, 100) en direction amont et par une partie à section croissante (102, 104) en direction aval.

5. Dispositif selon la revendication 4, **caractérisé en ce que** la zone à section réduite (90, 92) est formée dans une partie médiane de l'orifice (94, 96).

6. Dispositif selon l'une des revendications précédentes, **caractérisé en ce que** la ou les parties d'orifice à section croissante ont un profil conique ou incurvé.

7. Dispositif selon l'une des revendications 1 à 6, **caractérisé en ce que** le circuit pilote comprend un circuit de refroidissement de la couronne annulaire et **en ce que** des moyens de protection thermique de la face frontale (106, 108) de la couronne annulaire (74, 86) sont intercalés entre la face frontale de la couronne annulaire et la paroi frontale (28) de la chambre annulaire (22).

8. Dispositif selon la revendication 7, **caractérisée en ce que** les moyens de protection thermique comprennent des moyens d'isolation thermique de la face frontale (106, 108) de la couronne annulaire (74, 86) intercalés entre la face frontale (106, 108) de la couronne annulaire (74, 86) et la paroi frontale (28) de la chambre annulaire (22).

9. Dispositif selon la revendication 7, **caractérisée en ce que** les moyens de protection thermique sont formés par une partie du circuit de refroidissement s'étendant sur la face frontale de la couronne annulaire au voisinage immédiat des orifices d'injection.

10. Chambre annulaire de combustion de turbomachine, **caractérisée en ce qu'**elle comprend au moins un dispositif d'injection de carburant selon l'une des revendications précédentes.

11. Turbomachine, telle qu'un turboréacteur ou un turbopropulseur, **caractérisée en ce qu'**elle comprend une chambre de combustion selon la revendication 10.

## Patentansprüche

1. Vorrichtung zum Einspritzen von Kraftstoff für eine ringförmige Verbrennungskammer einer Turbomaschine bzw. eines Turbotriebwerks, enthaltend einen Pilotkreis, der einen Injektor (16) dauerhaft speist, welcher in eine erste Venturi-Düse (12) mündet, und einen Mehrpunktkreis, der Einspritzöffnungen (42) intermittierend speist, die in einer Stirnseite (28) einer ringförmigen Kammer (22) ausgeführt sind, die einer zweiten Venturi-Düse (14) vorgelagert ausgebildet ist, welche koaxial zur ersten Venturi-Düse (12) verläuft und diese umgibt, wobei ein ringförmiger Kranz (74, 86) in der ringförmigen Kammer (22) gelagert ist und Durchtrittsöffnungen (78, 84) für den Durchtritt von Kraftstoff aufweist, die in die vorgenannten Einspritzöffnungen (42) münden, **dadurch gekennzeichnet, dass** jede im ringförmigen Kranz (74, 86) ausgebildete Durchtrittsöffnung (78, 84) für den Durchtritt von Kraftstoff einen Bereich (76, 83, 90, 92) mit vermindertem Querschnitt aufweist, der zumindest in Richtung stromaufwärts oder stromabwärts von einem Öffnungsabschnitt mit ansteigendem Querschnitt fortgesetzt wird.

2. Vorrichtung nach Anspruch 1, **dadurch gekennzeichnet, dass** der Abschnitt mit ansteigendem Querschnitt sich fortschreitend bis zur vorgelagerten bzw. nachgelagerten Mündung der Öffnung (78, 84) vergrößert.

3. Vorrichtung nach Anspruch 1 oder 2, **dadurch gekennzeichnet, dass** der Bereich (76, 83) mit verminderten Querschnitt an einem vorgelagerten bzw. nachgelagerten Ende der Öffnung (78, 84) ausgebildet ist.

4. Vorrichtung nach Anspruch 1 oder 2, **dadurch gekennzeichnet, dass** der Bereich (90, 92) mit vermindertem Querschnitt zwischen dem stromaufwärtigen und dem stromabwärtigen Ende der Öffnung (94, 96) ausgebildet ist und von einem Abschnitt (98, 100) mit ansteigendem Querschnitt in Richtung stromaufwärts und von einem Abschnitt (102, 104) mit ansteigendem Querschnitt in Richtung stromabwärts fortgesetzt wird.

5. Vorrichtung nach Anspruch 4, **dadurch gekennzeichnet, dass** der Bereich mit vermindertem Querschnitt (90, 92) in einem mittleren Abschnitt der Öffnung (94, 96) ausgebildet ist.

6. Vorrichtung nach einem der vorangehenden Ansprüche, **dadurch gekennzeichnet, dass** der bzw. die Öffnungsabschnitte mit ansteigendem Querschnitt ein konisches oder gekrümmtes Profil aufweisen.

7. Vorrichtung nach einem der Ansprüche 1 bis 6, **dadurch gekennzeichnet, dass** der Pilotkreis einen Kühlkreis zum Kühlen des ringförmigen Kranzes aufweist und dass Wärmeschutzmittel für die Stirnseite (106, 108) des ringförmigen Kranzes (74, 86) zwischen der Stirnseite des ringförmigen Kranzes und der Stirnwand (28) der ringförmigen Kammer (22) eingesetzt sind.

8. Vorrichtung nach Anspruch 7, **dadurch gekennzeichnet, dass** die Wärmeschutzmittel Wärmeisoliermittel für die Stirnseite (106, 108) des ringförmigen Kranzes (74, 86) aufweisen, die zwischen der Stirnseite (106, 108) des ringförmigen Kranzes (74, 86) und der Stirnwand (28) der ringförmigen Kammer (22) eingesetzt sind.

9. Vorrichtung nach Anspruch 7, **dadurch gekennzeichnet, dass** die Wärmeschutzmittel aus einem Abschnitt des Kühlkreises gebildet sind, der sich über die Stirnseite des ringförmigen Kranzes unmittelbar angrenzend an die Einspritzöffnungen erstreckt.

10. Ringförmige Verbrennungskammer einer Turbomaschine bzw. eines Turbotriebwerks, **dadurch gekennzeichnet, dass** sie zumindest eine Vorrichtung zum Einspritzen von Kraftstoff nach einem der vorangehenden Ansprüche aufweist.

11. Turbomaschine bzw. Turbinentriebwerk, wie etwa Turbostrahltriebwerk oder Turbopropellertriebwerk, **dadurch gekennzeichnet, dass** sie bzw. es eine Verbrennungskammer nach Anspruch 10 aufweist.

## Claims

1. A fuel injection device for an annular combustion chamber of a turbine engine, the device comprising a pilot circuit continuously feeding an injector (16) opening out into a first Venturi (12) and a multipoint circuit intermittently feeding injection orifices (42) formed in a front face (28) of an upstream annular chamber (22) of a second Venturi (14) that is coaxial about the first Venturi (12), an annular ring (74, 86) being mounted in the annular chamber (22) and including fuel-passing orifices (78, 84) opening out into the above-mentioned injection orifices (42), the device being **characterized in that** each fuel-passing orifice (78, 84) formed in the annular ring (74, 86) has a zone (76, 83, 90, 92) of small section extended at least downstream or upstream by a portion of increasing section.

2. A device according to claim 1, **characterized in that** the portion of increasing section increases progressively to the upstream or downstream end of the orifice (78, 84).

3. A device according to claim 1 or claim 2, **characterized in that** the small section zone (76, 83) is formed at an upstream or downstream end of the orifice (78, 84).

4. A device according to claim 1 or claim 2, **characterized in that** the small section zone (90, 92) is formed between the upstream and downstream ends of the orifice (94, 96) and is extended by respective portions (98, 100; 102, 104) of section that increases going upstream and of section that increases going downstream.

5. A device according to claim 4, **characterized in that** the small section zone (90, 92) is formed in a middle portion of the orifice (94, 96).

6. A device according to any preceding claim, **characterized in that** the increasing-section orifice portion(s) is/are of profile that is straight or curved.

7. A device according to any one of claims 1 to 6, **characterized in that** the pilot circuit includes a circuit for cooling the annular ring, and **in that** means for thermally protecting the front face (106, 108) of the annular ring (74, 86) are interposed between the front face of the annular ring and the front face (28) of the annular chamber (22).

8. A device according to claim 7, **characterized in that** the thermal protection means comprise means for thermally insulating the front face (106, 108) of the annular ring (74, 86) interposed between the front face (106, 108) of the annular ring (74, 86) and the front wall (28) of the annular chamber (22).

9. A device according to claim 7, **characterized in that** the thermal protection means are formed by a portion of the cooling circuit extending over the front face of the annular ring in the immediate vicinity of the injection orifices.

10. An annular combustion chamber of a turbine engine, **characterized in that** it includes at least one fuel injection device according to any preceding claim.

11. A turbine engine, such as a turbojet or a turboprop, **characterized in that** it includes a combustion chamber according to claim 10.
